# EUROPEAN PATENT APPLICATION

(11) **EP 4 410 872 A1**
(43) Date of publication of application: **07.08.2024**
(21) Application number: 22872486.0
(22) Date of filing: 22.06.2022
(51) Int. Cl.: C08J 3/12, B29B 11/16, C08L 1/02, B29K 201/00

(54) **SOLID OF MICROFIBROUS CELLULOSE AND METHOD FOR PRODUCING SOLID OF MICROFIBROUS CELLULOSE**

(30) Priority: 27.09.2021 JP 2021156575
(71) Applicant: Daio Paper Corporation, Ehime 799-0492 (JP)
(72) Inventor: IMAI, Takaaki, Shikokuchuo-shi, Ehime 799-0492 (JP); MATSUSUE, Ikko, Shikokuchuo-shi, Ehime 799-0492 (JP); UMEGUCHI, Naoto, Shikokuchuo-shi, Ehime 799-0492 (JP)
(74) Representative: Meissner Bolte Partnerschaft mbB
(86) International application number: PCT/JP2022/024957
(87) International publication number: WO 2023/047728

(57) **Abstract**

A microfiber cellulose solid body of which productivity in kneading treatment has been improved, as well as a method for preparing the microfiber cellulose solid body is provided. The microfiber cellulose solid body is formed by compressing a mixture containing resin powder and microfiber cellulose having an average fiber width of 0.1 to 19 µm, wherein the microfiber cellulose solid body has a volume of 6 to 4000 mm³ and a bulk density of 0.3 to 1.0 g/cm³.

## Description

### FIELD OF THE INVENTION

Nanotechnology, which aims to obtain new properties of a simple substance different from its inherent properties by making the substance finer to the nano-level, has recently been attracting attention. Microfiber cellulose prepared from pulp, which is a cellulose-based raw material, through chemical treatment, grinding, and the like processes, has excellent strength, elasticity, and the like properties. Shaped bodies produced through processing of such microfiber cellulose are expected to be used in various applications as a biomass-derived, high-strength material. As a material mainly composed of cellulose fibers and having excellent strength, there are known microfiber cellulose composite resins (Patent Publication 1) .

This publication discloses a high-strength material mainly composed of microfiber cellulose (composite resin), and makes various proposals based on the properties of the composite resin which have been determined.

### BACKGROUND ART

Patent Publication 1: JP 2013-11026 A

### SUMMARY OF THE INVENTION

A cellulose composite resin is usually prepared by kneading microfiber cellulose as a main raw material in a kneader, followed by injection molding. Microfiber cellulose with a high moisture percentage may undergo steam explosion during the kneading, which deteriorate productivity, so that microfiber cellulose with a lower moisture percentage is desired.

However, defibrated microfiber cellulose is bulky in a dry state, and is hard to be fed into a kneader at an increased feed rate per unit time, which leads to low productivity. It is therefore an object of the present invention to provide a microfiber cellulose solid body of which productivity in kneading treatment has been improved, as well as a method for preparing the microfiber cellulose solid body.

In the technical field related to preparation of microfiber cellulose or cellulose nanofibers through defibration of raw material pulp, research and development have been made focusing on the defibration technique, such as the manner or degree of defibration. However, the defibrated cellulose fibers are bulky, which may require special attention to its storage and handling. According to the present invention, cellulose fibers which have once been defibrated into fine fibers, are made into blocks, aiming to solve the above-mentioned problems. The followings are some of the aspects that solve the problems.

### <First Aspect>

A microfiber cellulose solid body formed by compressing a mixture containing resin powder and microfiber cellulose having an average fiber width of 0.1 to 19 µm,
wherein the microfiber cellulose solid body has a volume of 6 to 4000 mm³ and a bulk density of 0.3 to 1.0 g/cm³.

Hitherto, microfiber cellulose prepared through defibration of raw material pulp may aggregate disorderly in a dry state to form granules, and when collected together, may be bulky and hard to handle. In some processes, microfiber cellulose may be scattered and partly lost. In feeding into a kneader, for example, microfiber cellulose powder with excess moisture may be entangled, settled, or form bridges at the supply port, which may lead to difficulties in stabilizing the feed rate.

Even if compressed into chunks for reducing its bulkiness, microfiber cellulose is brittle and will disadvantageously disintegrates easily. It is the present invention that solves these problems. According to this aspect, the microfiber cellulose is easy to handle, hard to be entangled or settled, and capable of being fed into a kneader at an increased feed rate per unit time, which contributes to improved productivity of a microfiber cellulose composite resin.

The microfiber cellulose solid body according to the present invention is formed by compressing a mixture containing resin powder and microfiber cellulose, and has a particular volume. It is hard to describe this solid body, but imaging wood pellets formed by compressing a volume of finely-milled wood would help getting an idea of the solid body according to the present aspect.

However, wood pellets and the solid bodies of the present aspect are different in how they are compressed.

In wood pellets, finely-milled wood is easily compressed under pressure, which is due to the adhesive action of lignin, hemicellulose, or the like contained in the wood. On the other hand, microfiber cellulose has been deprived, during defibration, of such materials providing the adhesive action to some extent, so that even if compressed under pressure, microfiber cellulose cannot maintain its compressed state upon release of the pressure, to easily disintegrate.

In this respect, the inventors of the present invention have found out that mixing resin powder to microfiber cellulose to obtain a mixture and applying pressure to the mixture results in microfiber cellulose solid bodies in a maintained compressed state. A mechanism to maintain the compressed state is not known, but could be assumed as follows. First, for good dispersion of the microfiber cellulose, the particle size of the resin powder to be mixed with the microfiber cellulose is made relatively small compared to the size of the microfiber cellulose. Second, the microfiber cellulose and the resin powder are respectively well-distributed in good balance. Third, the resin powder provides the adhesive action, like lignin or hemicellulose in wood pellets, and assists the mixture to be easily made into solid bodies upon compression under pressure.

The microfiber cellulose solid body according to the present aspect, which has been compressed and has a particular volume, will not scatter, so that the amount of its loss may be reduced. Further, the microfiber cellulose solid bodies, even with excess moisture, are hard to entangle, settle, or form bridges at the supply port of a kneader. Moreover, the microfiber cellulose solid body has a higher bulk density compared to powdered microfiber cellulose, which allows more raw material being fed into the kneader per unit time, being likely to lead to improved productivity of a microfiber cellulose composite resin.

The volume of the microfiber cellulose solid body is preferably within the above-mentioned range, taking into account the amount of energy required for the compression, or efficiency in transportation or temporary storage.

In general, microfiber cellulose aggregates in a dry state. Here, "aggregating" is conceptually different from "compressing" according to the present aspect. The "compressing" in the compressing of the microfiber cellulose into solid bodies means compressing of a mixture containing resin powder and microfiber cellulose, and not the aggregation of microfiber cellulose alone. Further, the microfiber cellulose solid bodies is formed by compression of a mixture containing resin powder and a quantity of microfiber cellulose.

### <Second Aspect>

The microfiber cellulose solid body according to the first aspect,
wherein the mixture includes microfiber cellulose having an average fiber width of 0.1 to 19 µm, and hydroxyl groups of the microfiber cellulose have partially or fully been substituted with carbamate groups.

Cellulose fibers easily aggregate by mutual hydrogen bonding under the action of their own hydroxyl groups, but with the hydroxyl groups substituted with carbamate groups, exhibit reduced hydrophilicity and become easily dispersible due to the carbamate groups, which are bulkier compared to the hydroxyl groups (hereinbelow, the microfiber cellulose in which its hydroxyl groups are substituted with carbamate groups, may particularly be referred to "substitutional microfiber cellulose"). In defibration treatment of raw material pulp, when the microfiber cellulose does not have substitutional carbamate groups, defibration of part of the microfiber cellulose may remain insufficient, whereas the substitutional microfiber cellulose may be fully defibrated easily. The more the microfiber cellulose is fully defibrated, the more uniformly it is dispersed in the resin powder, so that the microfiber cellulose is less disproportionate when mixed with the resin powder. In the mixture containing the microfiber cellulose homogeneously dispersed therein, the microfiber cellulose easily enters into the gaps between the resin powder particles, and by applying pressure with the microfiber cellulose sufficiently dispersed, microfiber cellulose solid bodies are obtained in which disproportion of the microfiber cellulose is limited.

### <Third Aspect>

The microfiber cellulose solid body according to the second aspect,
wherein a substitution rate of the hydroxy groups of the microfiber cellulose with the carbamate groups is 0.5 mmol/g to 2.0 mmol/g.

With a substitution rate within the above range, the microfiber cellulose is more hydrophobic, which leads to higher affinity with the hydrophobic resin powder, so that repulsion between the microfiber cellulose and the resin powder is reduced to thereby advantageously lower the disproportion of the microfiber cellulose in distribution throughout the microfiber cellulose solid bodies.

### <Fourth Aspect>

The microfiber cellulose solid body according to any one of the first to third aspects,
wherein the resin powder is formed of one or a combination of a plurality of members selected from the group consisting of maleic anhydride-modified polypropylene resins, polypropylene resins, and polyethylene resins.

A mixture of the microfiber cellulose with one or a combination of a plurality of resins selected from the above is excellent in compatibility, and mutually dispersed into a homogeneous mixture, so that the microfiber cellulose solid bodies formed through compression do not easily lose their shape.

### <Fifth Aspect>

The microfiber cellulose solid body according to any one of the first to fourth aspects,
wherein a moisture percentage of the microfiber cellulose solid body is 20% or less.

Microfiber cellulose solid bodies at a higher moisture content are swollen and heavy, which makes their transportation and storage difficult. Further, a large amount of moisture should be removed for kneading, which causes a lot of energy to be spent in the production of the composite resin. Moreover, the microfiber cellulose solid bodies at a higher moisture content are at a risk of frequent steam explosion in kneading. On the other hand, the microfiber cellulose solid bodies within the above range are not bulky and are light in weight, so as to be advantageous in that the solid bodies are easily transported and stored, and does not spend a lot of energy in making it into a composite resin, and further the frequency of steam explosion may be reduced.

### <Sixth Aspect>

The microfiber cellulose solid body according to any one of the first to fifth aspects,
wherein a fine fiber percentage of the microfiber cellulose is 5% to 80%.

Within the above-mentioned fine fiber percentage, a proportion of the fibers having a relatively larger fiber length is lower, which means that the microfiber cellulose is homogeneous, leading to little risk of the microfiber cellulose solid bodies to lose their shape and handleability of the same.

### <Seventh Aspect>

The microfiber cellulose solid body according to any one of the first to sixth aspects,
wherein a raw material pulp for the microfiber cellulose has a lignin content of 1% or lower.

With the lignin contained in the microfiber cellulose solid bodies being within the above-mentioned range, the strength of the composite resin into which the microfiber cellulose solid bodies are to be made is excellent.

### <Eighth Aspect>

A method for preparing a microfiber cellulose solid body, including:
subjecting a mixture containing resin powder and microfiber cellulose having an average fiber width of 0.1 to 19 µm, to a compression treatment to obtain a microfiber cellulose solid body,
wherein the compression treatment is performed so that the microfiber cellulose solid body has a volume of 6 to 4000 mm³ and a bulk density of 0.3 to 1.0 g/cm³.

According to this aspect, the effect similar to that of the first aspect is achieved.

### <Ninth Aspect>

A method for preparing a microfiber cellulose solid body, including:
heat-treating a cellulose raw material and at least one of urea and a derivative thereof to partially or fully substitute hydroxyl groups of cellulose with carbamate groups,
defibrating the cellulose raw material into an average fiber width of 0.1 to 19 µm, and
subjecting a mixture containing resin powder and a resulting microfiber cellulose to a compression treatment to obtain a microfiber cellulose solid body,
wherein the compression treatment is performed so that the microfiber cellulose solid body has a volume of 6 to 4000 mm³ and a bulk density of 0.3 to 1.0 g/cm³.

According to this aspect, the effect similar to that of the second aspect is achieved.

According to the present invention, there are provided a microfiber cellulose solid body of which productivity in kneading treatment is improved, and a method for preparing the microfiber cellulose solid body.

### BRIEF DESCRIPTION OF DRAWINGS

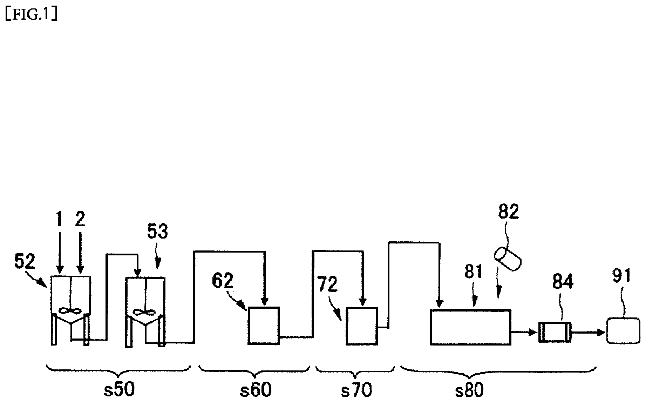

Fig. 1 is a chart illustrating an example of a method for producing a microfiber cellulose composite resin.

### DESCRIPTION OF THE INVENTION

Next, embodiments for carrying out the present invention are discussed. It should be noted that the present embodiments are mere examples of the present invention, and the scope of the present invention is not limited by the scope of the present embodiments.

The microfiber cellulose solid body according to the present invention is formed by compressing a mixture containing microfiber cellulose with an average fiber width of 0.1 to 19 µm (microfibrillated cellulose) (referred to also as "cellulose fibers" hereinbelow), and has a volume of 6 to 4000 mm³ and a bulk density of 0.3 to 1.0 g/cm³. The microfiber cellulose may be or may not be modified, and where modified, for example, the microfiber cellulose may have substitutional carbamate groups. In the microfiber cellulose with the substitutional carbamate groups, the hydroxyl groups (-OH) of the cellulose fibers have partially or fully been substituted with the carbamate groups.

The microfiber cellulose composite resin according to the present embodiment is obtained by kneading the microfiber cellulose solid bodies containing microfiber cellulose.

### <Microfiber Cellulose>

According to the present embodiment, the microfiber cellulose, which is a kind of fine fibers, has an average fiber width of 0.1 to 19 µm. The category of fine fibers of cellulose encompasses not only the microfiber cellulose, but also cellulose nanofibers, which have still smaller fiber widths. The microfiber cellulose, however, provides remarkably enhanced reinforcing effect on resins. In a washing step to be performed for removing residual unreacted urea and the like from the carbamation reaction, when the fibers to be washed are cellulose nanofibers, dewaterability is extremely poor. In contrast, microfiber cellulose may be more easily modified with carbamate groups compared to cellulose nanofibers, which are also a kind of fine fibers, in view of dewaterability. However, it is preferred to subject a cellulose raw material to the carbamation before making it finer.

According to the present embodiment, the microfiber cellulose means fibers having a larger average fiber width (diameter) compared to the cellulose nanofibers. Specifically, the average fiber width of the microfiber cellulose is, for example, 0.1 to 19 µm, preferably 0.5 to 15 µm, more preferably 1.0 to 10 µm. With an average fiber width below (less than) 0.1 µm, the microfiber cellulose differ nothing from cellulose nanofibers, and sufficient effect to enhance resin strength (particularly flexural modulus) may not be achieved. Also, a longer time is required for defibration, which in turn requires more energy. Further, dewaterability is impaired. With such an impaired dewaterability, a high amount of energy is required for drying, which in turn may cause deterioration of the microfiber cellulose to impair its strength. On the other hand, with an average fiber width over (exceeding) 19 µm, the microfiber cellulose differ nothing from pulp, and sufficient reinforcing effect may not be achieved.

The microfiber cellulose may be obtained by defibrating (making finer) a cellulose raw material (referred to also as raw material pulp hereinbelow). As the raw material pulp, one or more members may be selected and used from the group consisting of, for example, wood pulp made from hardwood, softwood, or the like; non-wood pulp made from straw, bagasse, cotton, hemp, bast fibers, or the like; and de-inked pulp (DIP) made from recovered used paper, waste paper, or the like. These various raw materials may be in the form of a ground product (powdered product), such as those referred to as cellulose-based powder.

In this regard, however, the raw material pulp is preferably wood pulp in order to avoid contamination of impurities as much as possible. As the wood pulp, one or more members may be selected and used from the group consisting of, for example, chemical pulp, mechanical pulp (TMP) and the like, from hardwood kraft pulp (LKP), softwood kraft pulp (NKP), or the like.

The hardwood kraft pulp may be hardwood bleached kraft pulp, hardwood unbleached kraft pulp, or hardwood semi-bleached kraft pulp. Similarly, the softwood kraft pulp may be softwood bleached kraft pulp, softwood unbleached kraft pulp, or softwood semi-bleached kraft pulp.

As the mechanical pulp, one or more members may be selected and used from the group consisting of, for example, stone ground pulp (SGP), pressurized stone ground pulp (PGW), refiner ground pulp (RGP), chemi-ground pulp (CGP), thermo-ground pulp (TGP), ground pulp (GP), thermomechanical pulp (TMP), chemithermomechanical pulp (CTMP), refiner mechanical pulp (RMP), and bleached thermomechanical pulp (BTMP).

It is preferred to use pulp having a lignin content of 1.0% or lower, more preferably 0.8% or lower, as a raw material pulp for the microfiber cellulose. When the carbamated microfiber cellulose is used as the microfiber cellulose, coloration tends to proceed where the cellulose fibers have been heat-treated to have a substitution rate of the hydroxyl groups with the carbamate groups of 0.5 mmol/g or higher. However, with the lignin content of the raw material pulp within the above-mentioned range, coloration caused by lignin may be limited, so that coloration of the resulting microfiber cellulose solid bodies or of the resulting microfiber cellulose composite resin may also be limited. Further, carbamation of a cellulose raw material is accompanied by carbamation of lignin, which is coexistent with cellulose. Then during washing of cellulose, the carbamated lignin is washed out and removed, which may result in lowering of the rate of carbamation of the cellulose left in the fibers. With the lignin content of the microfiber cellulose solid bodies within the above-mentioned range, the amount of the carbamates which flow out and do not contribute to fiber reinforcement, may be limited, so that the strength of the resulting composite resin may be superior.

The lignin content is determined in accordance with METHOD OF TESTING LIGNIN CONTENT (JAPAN TAPPI No. 61 (2000)).

For avoiding coloring, the Kappa number of the raw material pulp is preferably 2 or lower, more preferably 1 or lower.

The Kappa number is determined in accordance with DETERMINATION OF KAPPA NUMBER (JIS P 8211 (2011).

The lignin content and the Kappa number may be adjusted by, for example, selection, digestion, or breaching of the raw material pulp.

According to the present embodiment, the brightness of the raw material pulp is preferably 50% or higher, more preferably 80% or higher, particularly preferably 82% or higher. With a brightness of the raw material pulp per se of lower than 50%, further coloring develops during melt kneading with the resin pellets, which causes a still lower brightness of the resulting composite resin per se.

The brightness refers to a value determined in accordance with JIS P 8148: 2001.

The raw material pulp may be pretreated by a chemical method prior to defibration. Such pretreatment by a chemical method may be, for example, hydrolysis of polysaccharides with acid (acid treatment), hydrolysis of polysaccharides with enzyme (enzyme treatment), swelling of polysaccharides with alkali (alkali treatment), oxidation of polysaccharides with an oxidizing agent (oxidation treatment), or reduction of polysaccharides with a reducing agent (reduction treatment). Among these, as a pretreatment by a chemical method, enzyme treatment is preferred, and more preferred is one or more treatments selected from acid treatment, alkali treatment, and oxidation treatment, in addition to the enzyme treatment. The enzyme treatment is discussed in detail below.

As an enzyme used in the enzyme treatment, preferably at least one of, more preferably both of cellulase enzymes and hemicellulase enzymes are used. With such enzymes, defibration of the cellulose raw material is more facilitated. It is noted that cellulase enzymes cause degradation of cellulose in the presence of water, whereas hemicellulase enzymes cause degradation of hemicellulose in the presence of water.

The cellulase enzymes may be enzymes produced by, for example, the genus Trichoderma (filamentous fungus), the genus Acremonium (filamentous fungus), the genus Aspergillus (filamentous fungus), the genus Phanerochaete (basidiomycete), the genus Trametes (basidiomycete), the genus Humicola (filamentous fungus), the genus Bacillus (bacteria), the genus Schizophyllum (bacteria), the genus Streptomyces (bacteria), and the genus Pseudomonas (bacteria). These cellulase enzymes are available as reagents or commercial products. Examples of the commercial products may include, for example, Cellulosin T2 (manufactured by HBI ENZYMES INC.), Meicelase (manufactured by MEIJI SEIKA PHARMA CO., LTD.), Novozyme 188 (manufactured by NOVOZYMES), Multifect CX10L (manufactured by GENENCOR), and cellulase enzyme GC220 (manufactured by GENENCOR).

The cellulase enzymes may also be either EG (endoglucanase) or CBH (cellobiohydrolase). EG and CBH may be used alone or in mixture, or further in mixture with hemicellulase enzymes.

The hemicellulase enzymes may be, for example, xylanase, which degrades xylan; mannase, which degrades mannan; or arabanase, which degrades araban. Pectinase, which degrades pectin, may also be used.

Hemicellulose is a polysaccharide other than pectin, which is present among cellulose microfibrils of plant cell walls. Hemicellulose has numeral varieties and varies depending on the kinds of wood and among cell wall layers. Glucomannan is a major component in the secondary walls of softwood, whereas 4-O-methylglucuronoxylan is a major component in the secondary walls of hardwood. Thus, use of mannase is preferred for obtaining fine fibers from softwood bleached kraft pulp (NBKP), whereas use of xylanase is preferred for obtaining fine fibers from hardwood bleached kraft pulp (LBKP).

The amount of the enzyme to be added to the cellulose raw material may depend on, for example, the kind of enzyme, the kind of wood (either softwood or hardwood) used as a raw material, or the kind of mechanical pulp. The amount of the enzyme to be added may preferably be 0.1 to 3 mass%, more preferably 0.3 to 2.5 mass%, particularly preferably 0.5 to 2 mass%, of the amount of the cellulose raw material. With the amount of the enzyme below 0.1 mass%, sufficient effect due to the addition of the enzyme may not be obtained. With the amount of the enzyme over 3 mass%, cellulose may be saccharified to lower the yield of the fine fibers. A problem also resides in that improvement in effect worth the increased amount to be added may not be observed.

When a cellulase enzyme is used as the enzyme, the enzyme treatment is preferably carried out at a pH in a weakly acidic region (pH = 3.0 to 6.9) in view of the enzymatic reactivity. On the other hand, when a hemicellulase enzyme is used as the enzyme, the enzyme treatment is preferably carried out at a pH in a weakly alkaline region (pH = 7.1 to 10.0).

Irrespective of whether a cellulase enzyme or a hemicellulase enzyme is used as the enzyme, the enzyme treatment is carried out at a temperature of preferably 30 to 70 °C, more preferably 35 to 65 °C, particularly preferably 40 to 60 °C. At a temperature of 30 °C or higher, the enzymatic activity is hard to be lowered, and prolongation of the treatment time may be avoided. At a temperature of 70 °C or lower, enzyme inactivation may be avoided.

The duration of the enzyme treatment may depend on, for example, the type of the enzyme, the temperature in the enzyme treatment, and the pH in the enzyme treatment. Generally, the duration of the enzyme treatment is 0.5 to 24 hours.

After the enzyme treatment, the enzyme is preferably inactivated. Inactivation of enzymes may be effected by, for example, addition of an alkaline aqueous solution (preferably at pH 10 or higher, more preferably at pH 11 or higher) or addition of 80 to 100 °C hot water.

Note that the enzyme treatment causes cellulose to be decomposed into oligosaccharides or monosaccharides, which are browned under heat and colored like Karume-yaki (Japanese honeycomb toffee). Accordingly, the enzyme treatment is preferably followed by thorough washing of the raw material pulp with water.

Next, the alkali treatment is discussed. Alkali treatment prior to the defibration causes partial dissociation of hydroxyl groups in hemicellulose or cellulose in pulp, resulting in anionization of the molecules, which weakens intra- and intermolecular hydrogen bonds to promote dispersion of the cellulose raw material during the defibration.

As the alkali used in the alkali treatment, for example, sodium hydroxide, lithium hydroxide, potassium hydroxide, an aqueous ammonia solution, or organic alkali, such as tetramethylammonium hydroxide, tetraethylammonium hydroxide, tetrabutylammonium hydroxide, and benzyltrimethylammonium hydroxide may be used. In view of the manufacturing cost, sodium hydroxide is preferably used.

The enzyme treatment, acid treatment, or oxidation treatment prior to the defibration may result in a lower water retention, a higher degree of crystallinity, and also higher homogeneity of the microfiber cellulose. In this regard, microfiber cellulose at a lower water retention is easily dewatered, so that dewaterability of a cellulose fiber slurry may be improved.

The enzyme treatment, acid treatment, or oxidation treatment of the raw material pulp causes decomposition of the amorphous region of hemicellulose and cellulose in pulp, which leads to reduction of energy required for the defibration and to improvement in uniformity and dispersibility of the cellulose fibers. The pretreatment, however, lowers the aspect ratio of microfiber cellulose, and it is thus preferred to avoid excessive pretreatment for the purpose of using the microfiber cellulose as a reinforcing material for resins.

The defibration of the raw material pulp may be performed by beating the raw material pulp in, for example, beaters, homogenizers, such as high-pressure homogenizers and high-pressure homogenizing apparatus, millstone friction machines, such as grinders and mills, single-screw kneaders, multi-screw kneaders, kneaders, refiners, and jet mills. It is preferred to use refiners or jet mills.

The average fiber length (average of lengths of single fibers) of the microfiber cellulose is preferably 0.10 to 2.0 mm, more preferably 0.12 to 1.5 mm, particularly preferably 0.15 to 1.0 mm. With an average fiber length below 0.10 mm, the microfiber cellulose may not be able to form three dimensional networks among them, resulting in low flexural modulus or the like of the resulting composite rein, and possibility of little improvement in the reinforcing effect. With an average fiber length over 2.0 mm, the length of the microfiber cellulose differs nothing from that of the raw material pulp, so that the reinforcing effect may not be sufficient.

The average fiber length of the cellulose raw material, which is a raw material of microfiber cellulose, is preferably 0.50 to 5.00 mm, more preferably 1.00 to 3.00 mm, particularly preferably 1.50 to 2.50 mm. With an average fiber length of the cellulose raw material below 0.50 mm, reinforcing effect on resins after defibration may not be sufficient. With an average fiber length over 5.00 mm, manufacturing cost in defibration may be disadvantageous.

The average fiber length of the microfiber cellulose may arbitrarily be adjusted by, for example, selection, pretreatment, or defibration of the raw material pulp.

The fine fiber percentage (fine fiber A percentage) of the microfiber cellulose is preferably 5 to 80%, more preferably 10 to 70%, particularly preferably 15 to 60%. At a fine fiber percentage of 5% or higher, higher percentage of homogeneous fibers is present, which hardly causes progress of disintegration of the composite resin. However, at a fine fiber percentage over 80%, the flexural modulus may be insufficient. Further, at a fine fiber percentage over 80%, some fibers may be assumed to have too low a molecular weight, and such fibers are prone to production of oligosaccharides or monosaccharides, which cause coloring under heat.

With the fine fiber percentage of the microfiber cellulose within the above-discussed range, the fine fiber B percentage of the microfiber cellulose is preferably 15 to 50%, more preferably 16 to 40%. With the fine fiber B percentage of the microfiber cellulose within this range, a higher strength is imparted to the resulting composite resin.

The fine fiber percentage of the microfiber cellulose has been discussed above, and it is still more preferred to adjust the fine fiber percentage of also a cellulose raw material, which is a raw material of microfiber cellulose, to fall within the predetermined range. Specifically, the fine fiber percentage of the cellulose raw material, which is a raw material of microfiber cellulose, is preferably 1% or higher, more preferably 3 to 20%, particularly preferably 5 to 18%. With the fine fiber percentage of the cellulose raw material before defibration falling within the above range, the fibers undergo less damage even when the cellulose raw material is defibrated into microfiber cellulose with a fine fiber percentage of 30% or higher, resulting in improved reinforcing effect on resins.

The fine fiber percentage and the fine fiber A percentage may be adjusted through pretreatment, such as enzyme treatment. However, the enzyme treatment, in particular, may cause tattering of the fibers per se to impair the reinforcing effect on resins. In view of this, the amount of the enzyme to be added is preferably 2 mass% or less, more preferably 1 mass% or less, particularly preferably 0.5 mass% or less. Eliminating the enzyme treatment (the amount to be added is 0 mass%) may be an alternative.

As used herein, the "fine fiber percentage" (also referred to as the "fine fiber A percentage") refers to the percentage in terms of mass of the total pulp fibers having a fiber width of 75 µm or shorter and a fiber length of 0.2 mm or shorter, in the total mass of the pulp fibers. On the other hand, the "fine fiber B percentage" refers to the percentage in terms of mass of the total pulp fibers having a fiber width of 10 µm or shorter and a fiber length of 0.2 mm or longer, in the total mass of the pulp fibers.

The aspect ratio of the microfiber cellulose is preferably 5 to 20000, more preferably 8 to 30000. With an aspect ratio below 5, the microfiber cellulose may not be able to form three dimensional networks among them, resulting in poor reinforcing effect even with an average fiber length of 0.10 mm or longer. On the other hand, with an aspect ratio over 20000, the microfiber cellulose tends to be highly entangled, which may lead to insufficient dispersion in the resin.

The percentage of fibrillation of the microfiber cellulose is preferably 1.0 to 30.0%, more preferably 1.5 to 20.0%, particularly preferably 2.5 to 15.0%. With a percentage of fibrillation over 30.0%, the area of contact with water is too large, which may make the dewatering difficult even when the defibration results in the average fiber width within a range of 0.1 µm or larger. With a percentage of fibrillation below 1.0 %, the hydrogen bonding between the fibrils may be too little to form firm three dimensional networks.

As use herein, the percentage of fibrillation refers to the value determined by disintegrating cellulose fibers in accordance with JIS-P-8220: 2012 "Pulp-Laboratory wet disintegration", and measuring the disintegrated pulp with FiberLab manufactured by KAJAANI.

The degree of crystallinity of the microfiber cellulose is preferably 50% or higher, more preferably 55% or higher, particularly preferably 60% or higher. With a degree of crystallinity below 50%, the mixability with other fibers, for example, pulp or cellulose nanofibers, may be improved, whereas the strength of the fibers per se may be lowered to make it difficult to enhance the strength of resins. On the other hand, the degree of crystallinity of the microfiber cellulose is preferably 95% or lower, more preferably 90% or lower, particularly preferably 85% or lower. With a degree of crystallinity over 95%, the ratio of firm hydrogen bonding within the molecules is high, which makes the fibers themselves rigid and impairs dispersibility.

The degree of crystallinity of the microfiber cellulose may arbitrarily be adjusted by, for example, selection, pretreatment, or making finer of the raw material pulp.

The pulp viscosity of the microfiber cellulose is preferably 2 cps or higher, more preferably 4 cps or higher. With a pulp viscosity of the microfiber cellulose below 2 cps, control of aggregation of the microfiber cellulose may be difficult.

The freeness of the microfiber cellulose is preferably 500 ml or less, more preferably 300 ml or less, particularly preferably 100 ml or less. With a freeness of the microfiber cellulose over 500 ml, sufficient effect to enhance resin strength may not be obtained.

The zeta potential of the microfiber cellulose is preferably -150 to 20 mV, more preferably -100 to 0 mV, particularly preferably -80 to -10 mV. With a zeta potential below -150 mV, compatibility with resins may significantly be deteriorated, resulting in insufficient reinforcing effect. With a zeta potential over 20 mV, dispersion stability may be impaired.

The water retention of the microfiber cellulose is preferably 80 to 400%, more preferably 90 to 350%, particularly preferably 100 to 300%. With a water retention below 80%, the microfiber cellulose differs nothing from the raw material pulp, so that the reinforcing effect may be insufficient. With a water retention over 400%, dewaterability tends to be poor, and the microfiber cellulose tends to aggregate. With a water retention of 80 to 400%, controlling the moisture content of the microfiber cellulose solid bodies, as will be discussed later, to 20% or lower is facilitated and the fibers are hard to be damaged, which contribute to enhancement of strength of the composite resin. Note that the water retention of the microfiber cellulose may be made still lower by the substitution of its hydroxy groups with carbamate groups, which may improve dewaterability and drying property.

The water retention of the microfiber cellulose may arbitrarily be adjusted by, for example, selection, pretreatment, or defibration of the raw material pulp.

The microfiber cellulose may or may not have carbamate groups. When to substitute the hydroxyl groups of the microfiber cellulose with carbamate groups is not particularly limited as long as it is prior to subjecting the mixture containing resin powder and the microfiber cellulose to compression. For Example, the microfiber cellulose may have been caused to have carbamate groups through carbamation of a cellulose raw material, or through carbamation of microfiber cellulose (cellulose raw material that has been made finer).

Note that having carbamate groups means that carbamate groups (esters of carbamic acid) have been introduced into the microfiber cellulose. Carbamate groups are represented by the following structural formula (1), for example, -O-CO-NH-, and may be, for example, -O-CO-NH₂, -O-CONHR, or - O-CO-NR₂.

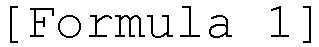

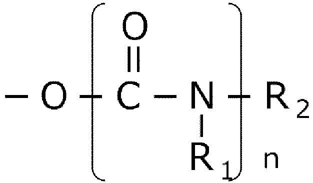

In the formula, n is an integer of 1 or more. R is independently at least any of a saturated straight chain hydrocarbon group, a saturated branched hydrocarbon group, a saturated cyclic hydrocarbon group, an unsaturated straight chain hydrocarbon group, an unsaturated branched hydrocarbon group, an aromatic group, and derivative groups thereof.

The saturated straight chain hydrocarbon group may be, for example, a straight chain alkyl group having 1 to 10 carbon atoms, such as a methyl group, an ethyl group, or a propyl group.

The saturated branched hydrocarbon group may be, for example, a branched alkyl group having 3 to 10 carbon atoms, such as an isopropyl group, a sec-butyl group, an isobutyl group, or a tert-butyl group.

The saturated cyclic hydrocarbon group may be, for example, a cycloalkyl group, such as a cyclopentyl group, a cyclohexyl group, or a norbornyl group.

The unsaturated straight chain hydrocarbon group may be, for example, a straight chain alkenyl group having 2 to 10 carbon atoms, such as an ethenyl group, a propene-1-yl group, or a propene-3-yl group, or a straight chain alkynyl group having 2 to 10 carbon atoms, such as an ethynyl group, a propyn-1-yl group, or a propyn-3-yl group.

The unsaturated branched hydrocarbon group may be, for example, a branched alkenyl group having 3 to 10 carbon atoms, such as a propene-2-yl group, a butene-2-yl group, or a butene-3-yl group, or a branched alkynyl group having 4 to 10 carbon atoms, such as a butyne-3-yl group.

The aromatic group may be, for example, a phenyl group, a tolyl group, a xylyl group, or a naphthyl group.

The derivative groups may be a saturated straight chain hydrocarbon group, a saturated branched hydrocarbon group, a saturated cyclic hydrocarbon group, an unsaturated straight chain hydrocarbon group, an unsaturated branched hydrocarbon group, or an aromatic group, in which one or a plurality of hydrogen atoms thereof is substituted with a substituent (for example, a hydroxy group, a carboxy group, or a halogen atom).

In the microfiber cellulose having carbamate groups (in which carbamate groups are introduced), part or all of the highly polar hydroxy groups have been substituted with relatively low polar carbamate groups. Thus, such microfiber cellulose with carbamate groups has lower hydrophilicity and higher affinity to resins having lower polarity. As a result, the microfiber cellulose with carbamate groups has excellent homogeneous dispersibility in the resin. Further, a slurry of the microfiber cellulose with carbamate groups has a lower viscosity and good handling property.

The substitution rate of the hydroxy groups of the microfiber cellulose with carbamate groups is preferably 0.5 to 2.0 mmol/g, more preferably 0.7 to 1.8 mmol/g, particularly preferably 1.0 to 1.6 mmol/g. It is assumed that, with a substitution rate of 2.0 mmol/g or higher, hydrogen bonding between cellulose molecules caused by the hydroxyl groups of cellulose is weakened (aggregation alleviation effect) and, due to the introduction of the carbamate groups, which have higher hydrophobicity compared to the hydroxyl groups, affinity to resins is improved (affinity improving effect), and as a result, the resin powder and the microfiber cellulose are mutually entangled and the microfiber cellulose molecules are hard to aggregate to securely play a part in reinforcing the resin. On the other hand, a higher rate of substitution with carbamate groups, in particular over 2.0 mmol/g, results in lower heat resistance of the resulting composite resin. In this regard, application of heat to cellulose fibers usually causes elimination of the hydroxyl groups or the like, and the molecular chain may be shortened from the site of the elimination or the like. Further, modification of part of the hydroxyl groups through carbamation or the like further facilitates elimination of the hydroxyl groups. Thus, it is assumed that too high a rate of carbamation may cause too short the molecular chain, too low the decomposition temperature, and too low the heat resistance. With a rate of substitution with carbamate groups over 2.0 mmol/g, the carbamation of the cellulose fibers results in shorter average fiber length of the pulp, and the resulting microfiber cellulose is prone to have an average fiber length of less than 0.1 mm, which may cause insufficient development of the reinforcing effect on resins. It should be understood that at a rate of substitution over 5.0 mmol/g, the cellulose fibers cannot maintain their fiber shapes.

As used herein, the rate of substitution (mmol/g) with carbamate groups refers to the amount of the carbamate groups by mole contained in 1 g of a cellulose raw material having carbamate groups. The rate of substitution with carbamate groups is obtained by determining the amount of the N atoms present in carbamated pulp by Kjeldahl method, and calculating the rate of carbamation per unit weight. Note that cellulose is a polymer having anhydroglucose as a structural unit, wherein one structural unit includes three hydroxy groups.

### <Carbamation>

The carbamated microfiber cellulose may be obtained by carbamation of the cellulose raw material followed by making the resulting product finer (defibrating), or by making the cellulose raw material finer (defibrating) followed by carbamation. In the present specification, discussion of the defibration of cellulose raw material precedes discussion of the carbamation (modification), but either the defibration or the carbamation may precede. However, it is preferred to perform the carbamation first, followed by the defibration. This is because dewaterability of the cellulose raw material before the defibration is highly effective, and the defibration of the cellulose raw material may be facilitated by the heating associated with the carbamation.

The process of carbamating the microfiber cellulose or the like (or sometimes a cellulose raw material as discussed above, as the case may be) may generally be divided into, for example, a mixing step, a removing step, and a heating step. Here, the mixing step and the removing step may together be referred to as a preparation step wherein a mixture to be subjected to the heating step is prepared. The carbamation is advantageous in effecting chemical modification without organic solvents.

In the mixing step, the microfiber cellulose or the like and urea or derivatives thereof (sometimes referred to simply as "urea or the like" hereinbelow) are mixed in a dispersion medium.

The urea or the derivatives thereof may be, for example, urea, thiourea, biuret, phenylurea, benzylurea, dimethylurea, diethylurea, tetramethylurea, or compounds obtained by substituting the hydrogen atoms of urea with alkyl groups. One or a combination of a plurality of these urea or derivatives thereof may be used, and use of urea is preferred.

The upper limit of the mixing ratio by mass of the urea or the like to the microfiber cellulose or the like (urea or the like / microfiber cellulose or the like) is preferably 300/100, more preferably 200/100. The lower limit is preferably 10/100, more preferably 20/100. With a mixing ratio by mass of 10/100 or higher, the carbamation efficiency is improved. With a mixing ratio by mass over 300/100, the carbamation plateaus.

The dispersion medium is usually water, but other dispersion media, such as alcohol or ether, or a mixture of water and other dispersion media may be used.

In the mixing step, for example, the microfiber cellulose or the like and the urea or the like may be added to water, the microfiber cellulose or the like may be added to an aqueous solution of the urea or the like, or the urea or the like may be added to a slurry containing the microfiber cellulose or the like. The addition may be followed by stirring for homogeneous mixing. Further, the dispersion liquid containing the microfiber cellulose or the like and the urea or the like may optionally contain other components. When the microfiber cellulose or the like is a cellulose material in the form of a sheet, the cellulose material may be impregnated with a mixed liquid of the urea or the like and a dispersion medium. A cellulose material in the form of a sheet may be expected to lower the heating temperature or to shorten the duration of heating in the heating treatment, as heat is easily transferred within the sheet.

In the removing step, the dispersion medium is removed from the dispersion liquid containing the microfiber cellulose or the like and the urea or the like obtained from the mixing step. By removing the dispersion medium, the urea or the like may efficiently be reacted in the subsequent heating step.

The removal of the dispersion medium is preferably carried out by volatilizing the dispersion medium under heating. By this means, only the dispersion medium may efficiently be removed, leaving the components including the urea or the like.

The lower limit of the heating temperature in the removing step is, when the dispersion medium is water, preferably 50 °C, more preferably 70 °C, particularly preferably 90 °C. At a heating temperature of 50 °C or higher, the dispersion medium may efficiently be volatilized (removed). On the other hand, the upper limit of the heating temperature is preferably 120 °C, more preferably 100 °C. At a heating temperature over 120 °C, the dispersion medium and urea may react, resulting in self-decomposition of urea.

In the removing step, duration of the heating may suitably be adjusted depending on the solid concentration of the dispersion liquid, or the like, and may specifically be, for example, 6 to 24 hours.

In the heating step following the removing step, the mixture of the microfiber cellulose or the like and the urea or the like is heat-treated. In this heating step, part or all of the hydroxy groups of the microfiber cellulose or the like are reacted with the urea or the like and substituted with carbamate groups. More specifically, the urea or the like, when heated, is decomposed into isocyanic acid and ammonia as shown by the reaction formula (1) below, and the isocyanic acid, which is highly reactive, reacts with the hydroxyl groups of cellulose to form carbamate groups as shown by the reaction formula (2) below.

NH₂-CO-NH₂ → H-N=C=O + NH₃ ... (1)

Cell-OH + H-N=C=O → Cell-O-CO-NH₂ ... (2)

The lower limit of the heating temperature in the heating step is preferably 120 °C, more preferably 130 °C, particularly preferably the melting point of urea (about 134 °C), still more preferably 140 °C, most preferably 150 °C. At a heating temperature of 120 °C or higher, carbamation proceeds efficiently. The upper limit of the heating temperature is preferably 200 °C, more preferably 180 °C, particularly preferably 170 °C. At a heating temperature over 200 °C, the microfiber cellulose or the like may decompose, which may lead to insufficient reinforcing effect.

The lower limit of duration of the heating in the heating step is preferably 1 minute, more preferably 5 minutes, particularly preferably 30 minutes, still more preferably 1 hour, most preferably 2 hours. With the heating for 1 minute or longer, the carbamation reaction may be ensured. On the other hand, the upper limit of duration of the heating is preferably 5 hours, more preferably 3 hours. The heating for over 5 hours is not economical, and sufficient carbamation may be effected in 5 hours.

Yet, prolonged heating may deteriorate cellulose fibers. In this light, pH conditions in the heating step are important. The pH is preferably pH 9 or higher, more preferably pH 9 to 13, particularly preferably pH 10 to 12, which are under the alkaline conditions. The second best is at pH 7 or lower, preferably pH 3 to 7, particularly preferably pH 4 to 7, which are under the acidic or neutral conditions. Under the neutral conditions at pH 7 to 8, the average fiber length of the cellulose fibers may be short, resulting in inferior reinforcing effect on resins. On the other hand, under the alkaline conditions at pH 9 or higher, reactivity of the cellulose fibers may be enhanced, which promotes reaction with the urea or the like, resulting in efficient carbamation to ensure sufficient average fiber length of the cellulose fibers. Under the acidic conditions at pH 7 or lower, decomposition reaction of urea or the like into isocyanic acid and ammonia proceeds, which promotes reaction with the cellulose fibers, resulting in efficient carbamation to ensure sufficient average fiber length of the cellulose fibers. It is, however, preferred to perform the heating step under the alkaline conditions, where possible, as acid hydrolysis of cellulose may adversely proceed under the acidic conditions.

The pH may be adjusted by adding to the mixture an acidic compound (for example, acetic acid or citric acid) or an alkaline compound (for example, sodium hydroxide or calcium hydroxide).

For the heating in the heating step, for example, a hot air dryer, a paper machine, or a dry pulp machine may be used.

The mixture obtained from the heating step may be washed. The washing may be carried out with water or the like. By this washing, unreacted residual urea or the like may be removed.

### <Slurry>

The microfiber cellulose is dispersed in an aqueous medium to prepare a dispersion (slurry), as needed. The aqueous medium is particularly preferably water in its entirety, but aqueous medium partly containing another liquid compatible with water may also be used. Such another liquid may be, for example, a lower alcohol having 3 or less carbon atoms.

The solid concentration of the slurry is preferably 0.1 to 10.0 mass%, more preferably 0.5 to 5.0 mass%. With a solid concentration below 0.1 mass%, an excessive amount of energy may be required for dewatering and drying. With a solid concentration over 10.0 mass%, fluidity of the slurry per se may be too low to homogeneously admix with the dispersant, when used.

### <Resin Powder>

The microfiber cellulose may aggregate depending on its storage conditions, and once aggregated, take a lot of work for redispersion. In order to reduce the aggregation, or to facilitate redispersion, of the microfiber cellulose, it is advisable to mix resin powder with the microfiber cellulose in advance. The microfiber cellulose, in the form of a mixture with resin powder, is stable in a dispersed state and hard to aggregate. The microfiber cellulose tends to aggregate particularly in a dried state, so that mixing the microfiber cellulose with resin powder may reduce the aggregation. The resin powder in the mixture containing resin powder and the microfiber cellulose may be, for example, of polyolefin resin, epoxy resin, or styrene elastomer resin, and use of polyolefin resin is preferred.

As a polyolefin component, one or more polymers of alkenes may be selected and used from the group consisting of, for example, ethylene, propylene, butadiene, and isoprene. Preferably, use of a polypropylene resin, which is a polymer of propylene, is preferred.

The resin powder included in the mixture may preferably powder of acid-modified resin of which main chain or part of side chains has been substituted (modified) with acid radicals. Such acid-modified resin powder has acid radicals that are ionically bonded to part or all of the carbamate groups of the microfiber cellulose. This ionic bonding enhances the resin reinforcing effect.

The acid-modified resin powder may be, for example, polyolefin resins, epoxy resins, or styrene elastomer resins, in which hydrogen groups are substituted with acid radicals, i.e., acid-modified polyolefin resins, acid-modified epoxy resins, or acid-modified styrene elastomer resins. Use of acid-modified polyolefin resins is preferred. An acid-modified polyolefin resin is a copolymer of an unsaturated carboxylic acid component and a polyolefin component.

As the unsaturated carboxylic acid component, one or more members may be selected and used from the group consisting of, for example, maleic anhydrides, phthalic anhydrides, itaconic anhydrides, citraconic anhydrides, and citric anhydrides. Preferably, use of maleic anhydrides is preferred, and thus use of maleic anhydride-modified polypropylene resins is preferred.

The resin powder to be mixed with the microfiber cellulose may be a mixture of acid-modified resin powder and acid-unmodified resin powder, acid-modified resin powder in its entirety, or acid-unmodified resin powder in its entirety. When acid-modified resin powder and acid-unmodified resin powder are mixed for use, the proportion of the acid-unmodified resin powder is preferably 0 to 200 parts by mass, more preferably 1 to 100 parts by mass, particularly preferably 10 to 70 parts by mass, per 100 parts by mass of the acid-modified resin powder.

The ratio of the average particle size of the resin powder to the average fiber width of the microfiber cellulose to be mixed therewith (average particle size (µm) of resin powder / average fiber width (µm) of microfiber cellulose) may be preferably 12 to 200, more preferably 25 to 100. With the ratio below 12, the resin powder is too small relative to the microfiber cellulose, so that the fibers may contact with each other during drying so that development of the anti-aggregation effect produced by the intervention of the resin powder is limited. With the ratio over 200, the resin powder is too large relative to the microfiber cellulose, so that the resin powder may not enter the gaps among the fibers during drying to impede development of the anti-aggregation effect produced by the intervention of the resin powder. With the microfiber cellulose according to the present embodiment, the average particle size of the resin powder is preferably 1 to 2000 µm, more preferably 10 to 1500 µm, still more preferably 100 to 1000 µm. The resin powder having the average particle size within this range may advantageously keep the microfiber cellulose in a dried state from aggregating.

The weight average molecular weight of the maleic anhydride-modified polypropylene is, for example, 1000 to 100000, preferably 3000 to 50000.

The acid value of the maleic anhydride-modified polypropylene is preferably 0.5 mgKOH/g or more and 100 mgKOH/g or less, more preferably 1 mgKOH/g or more and 50 mgKOH/g or less.

Further, the melt flow rate (MFR) of the acid-modified resin powder is preferably 2000 g per 10 minutes or lower (190 °C, 2.16 kg), more preferably 1500 g per 10 minutes or lower, particularly preferably 500 g per 10 minutes or lower. With the MFR over 2000 g per 10 minutes, the acid-modified resin may disturb the dispersibility of the cellulose fibers.

Note that the acid value is determined by titration with potassium hydroxide in accordance with JIS-K2501. The MFR is determined by the weight of the sample flew out in 10 minutes at 190 °C under a 2.16 kg load in accordance with JIS-K7210.

Note that the resin powder to be mixed with the microfiber cellulose for the formation of the solid bodies and the resin pellets to be mixed in kneading a microfiber cellulose solid bodies are different in average particle size, and the resin powder preferably has a smaller average particle size compared to the resin pellets. Further, the resin powder and the resin pellets may be made of the same or different resin compounds.

In the microfiber cellulose solid bodies according to the present embodiment, the weight ratio of the resin powder to the microfiber cellulose is preferably 6:94 to 94:6, more preferably 10:90 to 90:10. Outside this range, the resin powder and the microfiber cellulose are hard to be formed into solid bodies, or the resulting microfiber cellulose solid bodies may easily disintegrate.

### <Dispersant>

The mixture containing the resin powder and the cellulose fiber solid bodies according to the present embodiment preferably contains a dispersant. As the dispersant, aromatic compounds having an amine group and/or a hydroxyl group or aliphatic compounds having an amine group and/or a hydroxyl group are preferred.

Examples of the aromatic compounds having an amine group and/or a hydroxyl group may include anilines, toluidines, trimethylanilines, anisidines, tyramines, histamines, tryptamines, phenols, dibutylhydroxytoluenes, bisphenol A's, cresols, eugenols, gallic acids, guaiacols, picric acids, phenolphthaleins, serotonins, dopamines, adrenalines, noradrenalines, thymols, tyrosines, salicylic acids, methyl salicylates, anisyl alcohols, salicyl alcohols, sinapyl alcohols, difenidols, diphenylmethanols, cinnamyl alcohols, scopolamines, triptophols, vanillyl alcohols, 3-phenyl-1-propanols, phenethyl alcohols, phenoxyethanols, veratryl alcohols, benzyl alcohols, benzoins, mandelic acids, mandelonitriles, benzoic acids, phthalic acids, isophthalic acids, terephthalic acids, mellitic acids, and cinnamic acids.

Examples of the aliphatic compounds having an amine group and/or a hydroxyl group may include capryl alcohols, 2-ethylhexanols, pelargonic alcohols, capric alcohols, undecyl alcohols, lauryl alcohols, tridecyl alcohols, myristyl alcohols, pentadecyl alcohols, cetanols, stearyl alcohols, elaidyl alcohols, oleyl alcohols, linoleyl alcohols, methylamines, dimethylamines, trimethylamines, ethylamines, diethylamines, ethylenediamines, triethanolamines, N,N-diisopropylethylamines, tetramethylethylenediamines, hexamethylenediamines, spermidines, spermines, amantadines, formic acids, acetic acids, propionic acids, butyric acids, valeric acids, caproic acids, enanthic acids, caprylic acids, pelargonic acids, capric acids, lauric acids, myristic acids, palmitic acids, margaric acids, stearic acids, oleic acids, linolic acids, linoleic acids, arachidonic acids, eicosapentaenoic acids, docosahexaenoic acids, and sorbic acids.

The dispersants mentioned above block hydrogen bonding between the molecules of the cellulose fibers. Consequently, with the dispersant contained in the mixture containing the resin powder and the microfiber cellulose, aggregation of the microfiber cellulose in the mixture may be reduced and, even in the resulting microfiber cellulose solid bodies, homogenous mixture of the microfiber cellulose and the resin powder may be maintained.

It is conceivable, in kneading the microfiber cellulose and resin pellets, to add a separate compatibilizer (agent), but mixing the microfiber cellulose and the dispersant (agent) in advance to prepare microfiber cellulose solid bodies, rather than adding the agent at this stage, results in more uniform clinging of the agent over the microfiber cellulose, to thereby enhance the effect to improve compatibility with the resin.

In addition, as the melting point of polypropylene, for example, is 160 °C, the microfiber cellulose and the resin pellets are kneaded at a temperature, for example, higher than this. In this state, the dispersant (liquid), if added, will be dried instantaneously. In this regard, there is known to prepare a masterbatch (a composite resin containing a high concentration of microfiber cellulose) using a resin with a lower melting point, and then lower the concentration of the microfiber cellulose by feeding resin pellets with an ordinary melting point into the kneader. However, since resins with a lower melting point are generally lower in strength, the strength of the composite resin may be lower according to this method.

The amount of the dispersant to be mixed is preferably 0.1 to 1000 parts by mass, more preferably 1 to 500 parts by mass, particularly preferably 10 to 200 parts by mass, per 100 parts by mass of the microfiber cellulose. With an amount of the dispersant to be added below 0.1 parts by mass, improvement in resin strength may not be sufficient. An amount of the dispersant to be added over 1000 parts by mass is excessive and tends to lower the resin strength.

It is assumed that the acid-modified resin discussed above is intended to improve the reinforcing effect through improvement of compatibility by its acid radicals ionically bonded with the carbamate groups of the microfiber cellulose, and has a large molecular weight and thus blends well with the resin, contributing to the improvement in strength. On the other hand, the dispersant mentioned above is intended to improve dispersibility of the cellulose fibers in the resin through blocking of the aggregation by being interposed between the hydroxyl groups of the microfiber cellulose, and has a lower molecular weight than that of the acid-modified resin, and thus is capable of entering the narrow space among the fibers of the microfiber cellulose, where the acid-modified resin cannot enter, to play a part in enhancing the dispersibility of the cellulose fibers and thus the strength of the solid body. In view of the above, it is preferred that the molecular weight of the acid-modified resin is 2 to 2000 times, preferably 5 to 1000 times the molecular weight of the dispersant.

### <Non-interactive Powder>

The microfiber cellulose solid bodies according to the present embodiment contain powder that is non-interactive with the microfiber cellulose. With the microfiber cellulose solid bodies containing the non-interactive powder, the microfiber cellulose may be brought into a form for developing the reinforcibility on resins. In this regard, according to this embodiment, before compounding the microfiber cellulose with resin pellets, the microfiber cellulose solid bodies may be subjected to a drying treatment so that its moisture percentage falls within the prescribed range. However, during drying, cellulose molecules may irreversibly aggregate by means of hydrogen bonding, which may prevent the reinforcing effect of the fibers from being fully exerted. In view of this, with the powder that is non-interactive with the microfiber cellulose in the presence of the microfiber cellulose, the hydrogen bonding between the cellulose molecules in the microfiber cellulose solid bodies is physically blocked. The non-interactive powder may be added to the mixture containing the resin and the microfiber cellulose in the form of an aqueous dispersion, to form a mixture.

As used herein, "non-interactive" means not forming a firm bonding with cellulose by means of covalent bonding, ionic bonding, or metallic bonding (i.e., hydrogen bonding and bonding with van der Waals force fall under the concept of non-interactiveness). Preferably, the firm bonding is bonding with a binding energy over 100 kJ/mol.

The non-interactive powder may preferably be inorganic powder which have little effect of dissociating the hydroxyl groups of the cellulose fibers into hydroxide ions when in coexistence in the mixture containing the resin powder and the microfiber cellulose. With such a property of the non-interactive powder, the cellulose fibers and the powder that is non-interactive with the cellulose fibers, when prepared into the microfiber cellulose solid bodies, followed by compounding with resin pellets or the like, may easily be dispersed in the resin or the like. The non-interactive powder is operationally advantageously the inorganic powder, in particular. Specifically, the moisture percentage of the microfiber cellulose solid bodies may be adjusted by, for example, drying through bringing an aqueous dispersion (mixed liquid of the microfiber cellulose and the resin powder and the non-interactive powder) into direct contact with a metallic drum as a heat source (e.g., drying with a Yankee dryer, a cylinder dryer, or the like), or by warming without bringing the aqueous dispersion into direct contact with a heat source, i.e., drying in the air (e.g., drying in a constant temperature dryer or the like).

The average particle size of the non-interactive powder is preferably 1 to 10000 µm, more preferably 10 to 5000 µm, particularly preferably 100 to 1000 µm. With an average particle size over 10000 µm, the powder may not be able to enter the gaps among the cellulose fibers to block the aggregation during removal of the aqueous medium from the microfiber cellulose in the form of slurry. With an average particle size below 1 µm, the powder may be too fine to block hydrogen bonding between the microfiber cellulose molecules.

As used herein, the average particle size of the non-interactive powder is the median diameter calculated from the volume-based particle size distribution determined of the powder as it is or in aqueous dispersion, using a particle size distribution measuring apparatus (e.g., laser diffraction/scattering-type particle size distribution measuring apparatus manufactured by HORIBA, LTD.).

The inorganic powder may be of a simple substance of a metal element belonging to Groups I to VIII of the Periodic Table, such as Fe, Na, K, Cu, Mg, Ca, Zn, Ba, Al, Ti, or silicon element, oxides thereof, hydroxides thereof, carbonates thereof, sulfates thereof, silicates thereof, sulfites thereof, or various clay minerals formed of these compounds. Specific examples may include, for example, barium sulfate, calcium sulfate, magnesium sulfate, sodium sulfate, calcium sulfite, zinc oxide, heavy calcium carbonate, light calcium carbonate, aluminum borate, alumina, iron oxide, calcium titanate, aluminum hydroxide, magnesium hydroxide, calcium hydroxide, sodium hydroxide, magnesium carbonate, calcium silicate, clay, wollastonite, glass beads, glass powder, silica gel, fumed silica, colloidal silica, silica sand, silica stone, quartz powder, diatomaceous earth, white carbon, and glass fiber. A plurality of these inorganic powders may be contained. The inorganic powder may be those contained in de-inked pulp, or so-called regenerated filler obtained by regenerating inorganic materials in paper sludge.

Preferably at least one inorganic powder selected from calcium carbonate, talc, white carbon, clay, sintered clay, titanium dioxide, and aluminum hydroxide, which are suitably used as paper fillers or pigments, and regenerated fillers, more preferably at least one inorganic powder selected from calcium carbonate, talc, and clay, particularly preferably either light calcium carbonate or heavy calcium carbonate, may be used. Calcium carbonate, talc, or clay, when used, facilitates compounding with a matrix of resin or the like. As these are general-purpose inorganic materials, no limit is imposed on their intended use, which is advantageous. Further, calcium carbonate is particularly preferred for the following reasons. With light calcium carbonate, size and shape of the powder may easily be made constant. This facilitates tailoring of the size and shape of the powder depending on the size and shape of cellulose fibers so as to facilitate entry of the powder into the gaps among cellulose fibers to block aggregation, thereby providing advantage of facilitating production of pinpoint effect. With heavy calcium carbonate, which has irregular shape, the powder, in the course of aggregation of the fibers during removal of the aqueous medium from the slurry, may advantageously enter the gaps among cellulose fibers to block aggregation even where various sizes of fibers are present in the slurry.

The amount of the non-interactive powder to be added may preferably be 1 to 9900 mass%, more preferably 5 to 1900 mass%, particularly preferably 10 to 900 mass% of the amount of the microfiber cellulose. With an amount below 1 mass%, the powder may not provide sufficient effect to enter the gaps among the cellulose fibers to block the aggregation. With an amount over 9900 mass%, the powder may disturb the microfiber cellulose to fulfill their functions as cellulose fibers. The non-interactive powder is preferably contained at a ratio that will not adversely affect thermal recycling.

### <Preparation Method>

The mixture containing the microfiber cellulose and the resin powder (the mixture optionally containing the dispersant, the non-interactive powder, or the like, where the dispersibility control of the microfiber cellulose is desired) may preferably be dried to a moisture percentage of 20% or less, prior to kneading with resin pellets as will be discussed in detail later. The mixture dried in this way is usually in the form of pellets. The mixture in the form of pellets may preferably be ground into a powdered product for processing into desired microfiber cellulose solid bodies. In this form, as the components of the mixture are not disproportionate in substance, and the microfiber cellulose solid bodies undergo uniform kneading action during kneading with the resin pellets, which reduces the coloring of the resulting microfiber cellulose composite resin. Also, no excess drying of the microfiber cellulose for removing moisture therefrom is needed prior to kneading with the resin pellets, which is thermally efficient. Further, when the non-interactive powder or the dispersant is already mixed in the mixture, the microfiber cellulose is less likely to be unredispersible even after the mixture is dried.

The mixture is dehydrated into a dehydrated product, as needed, prior to the drying. For the dehydration, one or more dehydrators may be selected and used from the group consisting of, for example, belt presses, screw presses, filter presses, twin rolls, twin wire formers, valveless filters, center disk filters, film treatment units, and centrifuges.

For drying the mixture or the dehydrated product, one or more means may be selected and used from the group consisting of, for example, rotary kiln drying, disk drying, air flow drying, medium fluidized drying, spray drying, drum drying, screw conveyor drying, paddle drying, single-screw kneading drying, multi-screw kneading drying, vacuum drying, and stirring drying.

The dried mixture (dried product) is pulverized into a powdered product. For pulverizing the dried product, one or more means may be selected and used from the group consisting of, for example, bead mills, kneaders, dispersers, twist mills, cut mills, and hammer mills.

The average particle size of the powdered product is preferably 1 to 2000 µm, more preferably 10 to 1500 µm, particularly preferably 100 to 1000 µm. With an average particle size of the powdered product over 2000 µm, the resulting microfiber cellulose solid bodies formed by compression may easily disintegrate upon application of external force. On the other hand, with an average particle size of the powdered product below 1 µm, the bulk density of the resulting microfiber cellulose solid bodies may be too low.

The average particle size of the powdered product may be controlled by regulating the degree of pulverization, or by classification in classification apparatus, such as filters or cyclones.

The moisture percentage of the mixture (the microfiber cellulose mixture) is 20% or lower, preferably 1 to 20%, more preferably 2 to 15%. With a moisture percentage over 20%, the mixture is hard to be compressed in the subsequent step.

The moisture percentage is a value determined by holding a sample at 105 °C for 6 hours or longer in a constant temperature dryer until fluctuation in mass is not observed and measuring the mass as a mass after drying, and calculated by the following formula: Moisture percentage (%) = [(mass before drying - mass after drying) / mass before drying] × 100

### <Microfiber Cellulose Solid body>

The microfiber cellulose solid bodies are formed by compression of the mixture containing the resin and the microfiber cellulose. The compression treatment refers to application of external pressure to the mixture, and may be performed, for example, in apparatus for compressing powdered product with external pressure and granulating the powdered product into pellets. Examples of such apparatus may include, for example, a biomass pelleter manufactured by EARTH ENGINEERING CORPORATION, a press pelleter manufactured by TIGER-CHIYODA MACHINERY CO., LTD., a wood pelleter manufactured by APTE INC., a biomass pelleter manufactured by SHINKOUKOUKI CORPORATION, a pelletizer manufactured by TOSATECH CO., LTD., a briquetter manufactured by WELHOUSE, and a briquetting machine manufactured by NIPPON STEEL TRADING CORPORATION. The mixture, by being introduced into the apparats, may be compressed into microfiber cellulose solid bodies in the form of pellets.

The microfiber cellulose solid body preferably has a volume of 6 to 4000 mm³ and a bulk density of 0.3 to 1.0 g/cm³ per piece, more preferably a volume of 50 to 3000 mm³ and a bulk density of 0.4 to 0.8 g/cm³ per piece. The volume and the bulk density of the microfiber cellulose solid bodies are corelated, and with either one of the volume and the bulk density being outside the above-mentioned range, the microfiber cellulose solid bodies may not produce the effect to improve productivity of a microfiber cellulose composite resin. For example, with the bulk density being within the above-mentioned range but the volume below 6 mm³, the effect from compression of the mixture cannot be expected since the microfiber cellulose solid bodies are too fine. On the other hand, with the volume over 4000 mm³, a number of pieces of the microfiber cellulose solid bodies, when packed in a container, may form gaps among the pieces to become bulky, or may be hard to be introduced into a kneader. Further, with the volume of the microfiber cellulose solid body being within the above-mentioned range but the bulk density over 1.0 g/cm³, the microfiber cellulose solid bodies, in kneading, may be hard and difficult to mix with each other or, even if mixed, may require a lot of time and energy until homogenously mixed.

The bulk density refers to a value determined in accordance with JIS K7365.

The shape of the microfiber cellulose solid body is not particularly limited, and may be, for example, a geometric three-dimensional shape, such as spheric, ellipsoidal, circular columnar, rectangular columnar, cubic, cuboid, conical, pyramidal, polyhedral, or gourd-shaped; a shape similar to these; or a shape of a combination of a plurality of these, but is not limited to these.

The microfiber cellulose solid bodies may have a moisture percentage of 20% or less, preferably 0 to 20%, more preferably 1 to 15%, still more preferably 2 to 10%. With a moisture percentage over 20%, the microfiber cellulose solid bodies may be at a risk of frequent steam explosion while heated in a kneader. By subjecting the microfiber cellulose mixture to the compression treatment, the moisture contained in the microfiber cellulose is squeezed out. Consequently, the moisture percentage is lower in the microfiber cellulose solid bodies than in the microfiber cellulose mixture.

It is assumed that, with a moisture percentage over 20%, the microfiber cellulose solid bodies, when exposed to a high temperature of, for example, 180 °C or higher during melt kneading or the like, may be brought into frequent contact with a high-temperature water, which causes reaction to lower the molecular weight of the microfiber cellulose to generate compounds with a lower molecular weight, which is a factor in the coloring, and the coloring caused by the compounds with a lower molecular weight may proceed in the kneading step. However, when the microfiber cellulose is carbamated to a rate of substitution with carbamate groups of 1 mmol/g or higher, the resulting carbamated pulp, for example, may be deprived of the substance responsible for coloring in a washing step, and by further reducing the moisture percentage to 20% or less, the high-temperature water may be caused to evaporate before it is brought into contact with the microfiber cellulose, avoiding the coloration.

An inherent substance responsible for coloring (hemicellulose or the like), when lowered in molecular weight, becomes water-soluble, and may be removed in a washing step of the carbamated pulp. The substance responsible for coloring, if remaining in the microfiber cellulose, is brought into contact with the above-mentioned high-temperature water to develop remarkable coloring.

In the microfiber cellulose solid bodies, the amount of the resin powder (which may be acid-modified resin powder or acid-unmodified resin powder, as the case may be) to be mixed is preferably 0.1 to 1000 parts by mass, more preferably 1 to 500 parts by mass, particularly preferably 10 to 200 parts by mass, per 100 parts by mass of the microfiber cellulose. With the amount of the resin powder below 0.1 part by mass per 100 parts by mass of the microfiber cellulose, the resulting microfiber cellulose solid bodies are brittle and hard to maintain its shape. With the amount of the resin powder over 1000 parts by mass, the microfiber cellulose solid bodies may tend to be hard to produce.

### <Kneading>

Conventionally, for kneading a resin with fine cellulose fibers as a resin-reinforcing material mixed thereto, as a preliminary step, raw material pulp was defibrated into fine cellulose fibers, which were then fed into a kneader with the resin. Here, the fine cellulose fibers, which had been defibrated and dried, were in powder form, and thus were bulky and might cause so called defective swallowing, which made it difficult to feed the fine cellulose fibers in a large amount. As a result, with a conventional powdered feedstock, the discharge rate from, for example, a φ15 mm twin-screw kneader was about 0.1 kg/h. Further, the composite resin containing the fine cellulose fibers and the resin, was discharged from the kneader, for example, in the form of strands, but it was sometime difficult to stabilize the supply amount, resulting in the strands being brittle, discharged as unstable strands, or colored.

On the other hand, according to the present embodiment, the feedstock to be fed to the kneader is in the form of solid bodies containing resin powder and microfiber cellulose and having a particular volume, which stabilizes the feed rate to the kneader and enhances thermal conductivity to the feedstock during kneading, so that the strands resulting from the kneading are stable and have less coloring, which otherwise developed conventionally.

In order to regulate the proportion of the microfiber cellulose in the ultimately-produced microfiber cellulose composite resin, resin pellets may be fed additionally in the mixing step and kneaded with the microfiber cellulose solid bodies. The resin pellets subjected to the kneading may have an average particle size of preferably 1 to 10 mm, more preferably 2 to 5 mm. With the average particle size below 1 mm, the pellets may melt before reaching the screw(s) to adhere on the wall surface or the like, and the adhered resin may interfere with the feeding of the subsequent resin pellets or the like to disturb quantitative feeding to the kneading. Further, the resin pellets have poor thermal conductivity, resulting in consumption of a large amount of energy until molten. With an average particle size over 10 mm, the resin pellets have poor thermal conductivity, resulting in consumption of a large amount of energy until molten, have difficulties in feeding into a kneader, are disproportionate in thermal conductivity, and require longer time for melting.

According to the present embodiment, the temperature for the kneading treatment is the glass transition temperature of the resin pellets or higher and may depend on the type of the resin pellets, and is preferably 100 to 220 °C, more preferably 130 to 210 °C, particularly preferably 160 to 200 °C. In the kneading treatment, not only the resin pellets, but also the resin powder contained in the microfiber cellulose solid bodies melts.

The kneading treatment according to the present embodiment is performed, when a φ15 mm twin-screw kneader is used, by feeding the microfiber cellulose solid bodies and the resin into the kneader so that the discharge rate is preferably 1.0 to 10.0 kg/h, more preferably 1.5 to 7.0 kg/h, still more preferably 2.0 to 5.0 kg/h.

For the kneading treatment, one or more members may be selected and used from the group consisting of, for example, single-screw or multi-screw (with two or more screws) kneaders, muti-screw kneading extruders, mixing rolls, kneaders, roll mills, Banbury mixers, screw presses, and dispersers. Among these, multi-screw kneaders with two or more screws are preferably used. Two or more multi-screw kneaders with two or more screws, arranged in parallel or in series, may also be used.

As the resin of the resin pellets, at least either one of a thermoplastic resin or a thermosetting resin may preferably be used.

As a thermoplastic resin, one or more resins may be selected and used from the group consisting of, for example, polyolefins, such as polypropylene (PP) and polyethylene (PE), polyester resins, such as aliphatic polyester resins and aromatic polyester resins, polystyrenes, polyacrylic resins, such as polymethacrylates and polyacrylates, polyamide resins, polycarbonate resins, and polyacetal resins.

It is preferred, however, to use at least either one of polyolefins and polyester resins. Polyolefins may preferably be polypropylenes. Polyester resins may be aliphatic polyester resins, such as polylactic acid or polycaprolactone, or aromatic polyester resins, such as polyethylene terephthalate, and biodegradable polyester resins (also referred to simply as "biodegradable resins") may preferably be used.

As the biodegradable resin, one or more members may be selected and used from the group consisting of, for example, hydroxycarboxylic acid-based aliphatic polyesters, caprolactone-based aliphatic polyesters, and dibasic acid polyesters.

As the hydroxycarboxylic acid-based aliphatic polyester, one or more members may be selected and used from the group consisting of, for example, homopolymers of a hydroxycarboxylic acid, such as lactic acid, malic acid, glucose acid, or 3-hydroxybutyric acid, and copolymers using at least one of these hydroxycarboxylic acids. It is preferred to use polylactic acid, a copolymer of lactic acid and any of the hydroxycarboxylic acids other than lactic acid, polycaprolactone, or a copolymer of caprolactone and at least one of the hydroxycarboxylic acids, and particularly preferred to use polylactic acid.

The lactic acid may be, for example, L-lactic acid or D-lactic acid, and a single kind or a combination of two or more kinds of these lactic acids may be used.

As the caprolactone-based aliphatic polyester, one or more members may be selected and used from the group consisting of, for example, homopolymers of polycaprolactone, and copolymers of polycaprolactone and any of the hydroxycarboxylic acids mentioned above.

As the dibasic acid polyester, one or more members may be selected and used from the group consisting of, for example, polybutylene succinates, polyethylene succinates, and polybutylene adipates.

A single kind alone or a combination of two or more kinds of the biodegradable resins may be used.

Examples of the thermosetting resins may include phenol resins, urea resins, melamine resins, furan resins, unsaturated polyesters, diallyl phthalate resins, vinyl ester resins, epoxy resins, polyurethane-based resins, silicone resins, and thermosetting polyimide-based resins. A single kind or a combination of two or more kinds of these resins may be used.

The resin pellets may contain an inorganic filler, preferably at a ratio that will not adversely affect thermal recycling.

Examples of the inorganic filler may include, for example, simple substances of metal elements belonging to Groups I to VIII of the Periodic Table, such as Fe, Na, K, Cu, Mg, Ca, Zn, Ba, Al, Ti, or a silicon element; oxides thereof, hydroxides thereof, carbonates thereof, sulfates thereof, silicates thereof, or sulfites thereof; and various clay minerals formed of these compounds.

Specific examples of the inorganic filler may include, for example, barium sulfate, calcium sulfate, magnesium sulfate, sodium sulfate, calcium sulfite, zinc oxide, silica, heavy calcium carbonate, light calcium carbonate, aluminum borate, alumina, iron oxide, calcium titanate, aluminum hydroxide, magnesium hydroxide, calcium hydroxide, sodium hydroxide, magnesium carbonate, calcium silicate, clay wollastonite, glass beads, glass powder, silica sand, silica stone, quartz powder, diatomaceous earth, white carbon, and glass fibers. A plurality of these inorganic fillers may be contained. Those contained in de-inked pulp may also be used.

The mixing ratio of the resin pellets to the microfiber cellulose is preferably 0 to 10000, more preferably 0 to 100, further more preferably 0 to 40 parts by mass of the resin pellets, with respect to 1 part by mass of the microfiber cellulose. With the mixing ratio within the above-mentioned range, the strength, in particular the bending strength and the tensile elastic modulus, of the resin composition may significantly be improved.

It is noted that the ratio of the microfiber cellulose and the resin contained in the eventually obtained microfiber cellulose composite resin is usually the same as the mixing ratio of the microfiber cellulose and the resin (the resin powder and the resin pellets).

The difference in solubility parameter (cal/cm³)^{1/2} (SP value) between the microfiber cellulose and the resin, that is, supposing that the SP value of the microfiber cellulose is SP_{MFC} and the SP value of the resin is SP_{POL}, the difference in SP value may be obtained by the formula: Difference in SP value = SP_{MFC} - SP_{POL}. The difference in SP value is preferably 10 to 0.1, more preferably 8 to 0.5, particularly preferably 5 to 1. With a difference in SP value over 10, the microfiber cellulose is not dispersed in the resin, and thus the reinforcing effect may not be obtained. With a difference in SP value below 0.1, the microfiber cellulose is disadvantageously dissolved in the resin and does not function as a filler, so that the reinforcing effect cannot be obtained. In this regard, a smaller difference between the SP_{POL} value of the resin (solvent) and the SP_{MFC} of the microfiber cellulose (solute) indicates higher reinforcing effect.

It is noted that the solubility parameter (cal/cm³)^{1/2} (SP value) refers to a scale of solvent/solute intermolecular force, and a solvent and a solute having closer SP values result in higher solubility.

### <Molding Process>

The kneaded product of the microfiber cellulose solid bodies and the resin may be molded into a desired form, following another kneading, if necessary. The size, thickness, form, and the like resulting from the molding are not particularly limited, and the molded product may be in the form of, for example, sheets, pellets, powders, or fibers.

The temperature during the molding process is at or higher than the glass transition point of the resin, and may be, for example, 90 to 260 °C, preferably 100 to 240

### °C, depending on the kind of the resin.

The kneaded product may be molded by, for example, die molding, injection molding, extrusion molding, hollow molding, or foam molding. The kneaded product may be spun into a fibrous shape, mixed with plant materials or the like, and formed into a mat shape or a board shape. The mixing of fibers may be performed by, for example, simultaneous deposition by air-laying.

As a machine for molding the kneaded product, one or more machines may be selected and used from the group consisting of, for example, injection molding machine, a blow molding machine, a hollow molding machine, a blow molding machine, a compression molding machine, an extrusion molding machine, a vacuum molding machine, and a pressure molding machine.

The molding discussed above may be performed following the kneading, or by first cooling the kneaded product, chipping the cooled product in a crusher or the like, and then introducing the resulting chips in a molding machine, such as an extrusion molding machine or an injection molding machine. It is noted that the molding is not an essential requirement of the present invention.

### <Other Components>

The cellulose nanofibers may be used together with the microfiber cellulose. Cellulose nanofibers are fine fibers, like microfiber cellulose, and have a role to complement the microfiber cellulose in enhancing the strength of resins. However, the fine fibers are preferably only the microfiber cellulose without cellulose nanofibers, where possible. Note that the average fiber width (average fiber diameter, or average of diameters of single fibers) of the cellulose nanofibers is preferably 4 to 100 nm, more preferably 10 to 80 nm.

Further, the pulp may be used together with the microfiber cellulose. Pulp has a role to remarkably improve the dewaterability of a cellulose fiber slurry. Like the cellulose nanofibers, however, it is most preferred that the pulp is also not contained, that is, at a content percentage of 0 mass%.

In addition to the fine fibers and pulp or the like, the resin composition may contain or may be caused to contain fibers derived from plant materials obtained from various plants, such as kenaf, jute hemp, manila hemp, sisal hemp, ganpi, mitsumata, mulberry, banana, pineapple, coconut, corn, sugar cane, bagasse, palm, papyrus, reed, esparto, survival grass, wheat, rice, bamboo, various kinds of softwood (cedar, cypress, and the like), hardwood, and cotton.

In the resin composition, one or more members selected from the group consisting of, for example, antistatic agents, flame retardants, antibacterial agents, colorants, radical scavengers, and foaming agents may be added without disturbing the effects of the present invention. These materials may be added to a dispersion of the microfiber cellulose, added while the microfiber cellulose and the resin pellets are kneaded, added to the resulting kneaded product, or added otherwise. In view of the manufacturing efficiency, these materials may preferably be added while the microfiber cellulose and the resin pellets are kneaded.

The resin composition may contain, as a rubber component, ethylene/α-olefin copolymer elastomers or styrene-butadiene block copolymers. Examples of α-olefins may include butene, isobutene, pentene, hexene, methylpentene, octene, decene, and dodecene.

The microfiber cellulose solid bodies (a reinforcing material for resin) thus obtained is kneaded with the resin pellets to eventually provide a microfiber cellulose composite resin. The kneading may be performed, for example, by mixing the resin in the form of pellets and the reinforcing material together, or by melting the resin pellets first, and then adding the reinforcing material into the molten material. The acid-modified resin, the dispersant, or the like may further be added at this stage.

### <Example of Production Method>

An example of the method for producing the microfiber cellulose composite resin is discussed with reference to Fig. 1. First, the microfiber cellulose 1 is provided, the hydroxy groups of which cellulose may or may not be partially or fully substituted with carbamate groups.

The microfiber cellulose 1 is subjected to a mixing step s50, wherein the microfiber cellulose 1 and the resin 2 are introduced into a mixer 52 and mixed to give a mixture. It is preferred to arrange two mixers in series (mixers 52, 53) for achieving a homogenous mixture.

The mixture is then subjected to a grinding step s60, wherein the mixture is fed into a grinding mill 62. The mixture is ground in the grinding mill 62 into powder of about 1 mm diameter.

This powder is then subjected to a compressing step s70, wherein the powder is compressed in a pelletizer 72 and formed into microfiber cellulose solid bodies.

The microfiber cellulose solid bodies are then subjected to a kneading/pelletizing step s80, wherein the microfiber cellulose solid bodies are fed into a kneader 81 and kneaded to give a microfiber cellulose composite resin. In addition to the microfiber cellulose solid bodies, fresh pellets 82 may additionally be fed for kneading. The resin pellets 82 may be fed at an initial stage of the kneading treatment in the kneader 81, or may be fed at a stage where the kneading treatment has proceeded to some extent. Here, "the kneading treatment has proceeded to some extent" may mean, for example, a half of the total time spent from feeding of the microfiber cellulose solid bodies into the feedstock initial feeding section of the kneader 81 until the kneaded solid bodies are discharged as a microfiber cellulose composite resin from the discharge section of the kneader 81. The microfiber cellulose composite resin discharged from the kneader 81 is processed into pellets (microfiber cellulose composite resin) in a pelletizing step 84, and passed to a packaging step 91, where the pellets are packaged to provide a final product.

In the kneading/pelletizing step s80, when fresh resin pellets 82 are to be fed in addition to the microfiber cellulose solid bodies into the kneader 81 for kneading, the amount of the fresh resin pellets 82 is preferably 0 to 10000 parts by mass, more preferably 0 to 1000 parts by mass, per 100 parts by mass of the microfiber cellulose. By feeding fresh resin pellets 82, the proportion of the microfiber cellulose may arbitrarily be regulated advantageously.

The kneading/pelletizing step s80 may be repeated twice or more times. For example, in repeating the kneading/pelletizing step s80 twice, the microfiber cellulose solid bodies are, in the first kneading/pelletizing step s80, fed into the kneader 81 and kneaded without fresh resin pellets 82 being fed, to obtain a microfiber cellulose composite resin. Then in the second kneading/pelletizing step s80, the microfiber cellulose composite resin thus obtained is fed again into the kneader 81 and further kneaded with fresh resin pellets 82 being fed to obtain a further microfiber cellulose composite resin (twice kneaded).

### <Definitions, Method of Measurement, and Others>

### <Average Fiber Width>

The average fiber width of the fine fibers (microfiber cellulose and cellulose nanofibers) is measured as follows.

First, 100 ml of an aqueous dispersion of fine fibers having a solid concentration of 0.01 to 0.1 mass% is filtered through a TEFLON (registered trademark) membrane filter, and subjected to solvent substitution once with 100 ml of ethanol and three times with 20 ml of t-butanol. Then the resulting mass is lyophilized and coated with osmium to obtain a sample. An electron microscopic SEM image of this sample is observed at a magnification of 3000 to 30000 folds, depending on the width of the constituent fibers. Specifically, two diagonal lines are drawn on the observation image, and three arbitrary straight lines passing the intersection of the diagonals are drawn. Then, the widths of a total of 100 fibers crossing these three straight lines are visually measured. The median diameter of the measured values is taken as the average fiber width.

### <Aspect Ratio>

An aspect ratio is a value obtained by dividing the average fiber length by the average fiber width. A larger aspect ratio causes a larger number of locations to be caught, which enhances the reinforcing effect but, as such, is assumed to result in lower ductility of the resin.

### <Water Retention>

The water retention is a value determined in accordance with JAPAN TAPPI No. 26 (2000).

### <Fiber Analysis>

The fine fiber percentage, the percentage of fibrillation, the average fiber length, and the like are measured using a fiber analyzer FS5 manufactured by Valmet K.K.

### <Degree of Crystallinity>

The degree of crystallinity is a value determined in accordance with JIS K 0131 (1996).

### <Viscosity>

The pulp viscosity is a value determined in accordance with TAPPI T 230.

### <Freeness>

The freeness is a value determined in accordance with JIS P8121-2 (2012).

### EXAMPLES

### <Assessment Test 1>

In Examples, a resin and a pulp sheet were used as raw materials to prepare microfiber cellulose solid bodies and then a microfiber cellulose composite resin, and the obtained products were subjected to an assessment test, respectively. The procedures of the test are as follows:
Procedure (1): One-hundred parts by mass of softwood kraft pulp in the form of a sheet with a moisture percentage of 50% were soaked in an aqueous solution composed of 50 parts by mass urea and 100 parts by mass water, to obtain soaked pulp. The soaked pulp thus obtained was dried at 105 °C for 24 hours with a hot air dryer to obtain pulp with a moisture percentage of 10% or less. This pulp with a moisture percentage of 10% or less was exposed to hot air at 160 °C from the hot air dryer to promote carbamation, to thereby obtain carbamated pulp. The rate of carbamation is as shown in Table 1.
Procedure (2): The carbamated pulp was fed into a disintegrating machine, and diluted and disintegrated with water to a solid concentration of 2% to obtain a pulp dispersion. The obtained pulp dispersion was dehydrated and washed for two cycles to obtain a slurry. This slurry was subjected to defibration in a refiner until the fine fiber A percentage became a predetermined value to obtain microfiber cellulose. The microfiber cellulose thus obtained was dispersed in water to prepare a microfiber cellulose dispersion with a solid concentration of 2.8 mass%.
Procedure (3): To the microfiber cellulose dispersion thus obtained, maleic anhydride-modified polypropylene (MAPP) powder and polypropylene (PP) powder at a mixing ratio as shown in Table 1 were added and stirred into a homogeneous mixture, which was heated with a contact dryer set at a temperature of 105 °C to evaporate moisture, to thereby obtain a mixture composed of resin (maleic anhydride-modified polypropylene and/or polypropylene) and the microfiber cellulose. The mixture has a bulk density of 0.1 g/cm3 or lower and a moisture percentage of 5 to 22%. The polypropylene powder was prepared by processing NOVATEC PPMA3 pellets manufactured by JAPAN POLYPROPYLENE CORPORATION into powder (through a 500 µm or less sieve, median diameter of 123 µm), and the maleic anhydride-modified polypropylene powder was SCONA 9212FA manufactured by BYK.
Procedure (4): The obtained mixture was subjected to a compression treatment in a compression machine (TS-55 manufactured by TOSATECH CO., LTD.) to obtain solid bodies composed of the resin and the microfiber cellulose (microfiber cellulose solid bodies). The microfiber cellulose solid bodies were in the form of columnar pieces each having a diameter of 4.5 mm and a height of 25 mm (a volume of about 400 mm³) and the bulk density and the moisture percentage as shown in Table 1.
Procedure (5) The microfiber cellulose solid bodies were fed into a kneader (twin-screw kneading extruder), and kneaded at 170 °C at 75 rpm. The feeding of the feedstock into the kneader was carried out so that the discharge rate was as shown in Table 1. The obtained microfiber cellulose composite resin was then cut in a pelleter into columnar pieces of 2 mm in diameter and 2 mm in height.
Procedure (6) The microfiber cellulose composite resin obtained from Procedure (5) and polypropylene pellets were fed as feedstock into a kneader so that the mass percentage of the microfiber cellulose was 10%, and kneaded at 180 °C at 200 rpm. The microfiber cellulose composite resin thus obtained was cut in a pelleter into columnar pieces of 2 mm in diameter and 2 mm in height to obtain pellets with 10% microfiber cellulose (pellets with 10% MFC) .
Procedure (7): The obtained microfiber cellulose composite resin pellets (pellets with 10% MFC) as a raw material was injection-molded at 180 °C into a test piece, which was cuboid and 59 mm in length, 9.6 mm in width, and 3.8 mm in thickness.

The production of the composite resin containing carbamated microfiber cellulose has been discussed above. For producing a composite resin containing non-carbamated microfiber cellulose, Procedure (1) discussed above is omitted and the following procedure is followed in Procedure (2). Softwood kraft pulp was fed into a disintegrating machine, and diluted and disintegrated with water to a solid concentration of 2% to obtain a pulp dispersion. The obtained pulp dispersion was dehydrated and washed for two cycles to obtain a slurry. This slurry was subjected to defibration in a refiner until the fine fiber percentage became a predetermined value to obtain microfiber cellulose. The microfiber cellulose thus obtained was dispersed in water to prepare a microfiber cellulose dispersion with a solid concentration of 2.8 mass%. Following this procedure, procedures similar to Procedures (3) to (7) were followed to obtain a similar test piece.

**[Table 1]**

| | Mixing ratio | | | MFC | | Solid body | | | | Pellet with 10% MFC |
|---|---|---|---|---|---|---|---|---|---|---|
| | MFC | MAPP | PP | Fine fiber A percentage | Carbamate group | Compression treatment | Bulk density g/cm³ | Moisture percentage | Discharge rate | Flexural modulus |
| | part by mass | part by mass | part by mass | | | | | | kg/h | |
| Test Example 1 | 55 | 27.5 | 17.5 | 40% or higher | 1.0 mmol/g or more | Performed | 0.6 | 10% or less | 3.0 | 1.4 times or more |
| Test Example 2 | 67 | 33 | 0 | 40% or higher | 1.0 mmol/g or more | Performed | 0.6 | 10% or less | 3.0 | 1.4 times or more |
| Test Example 3 | 90 | 10 | 0 | 40% or higher | 1.0 mmol/g or more | Performed | 0.6 | 10% or less | 3.0 | 1.4 times or more |
| Test Example 4 | 95 | 5 | 0 | 40% or higher | 1.0 mmol/g or more | Performed | 0.6 | 10% or less | 3.0 | less than 1.4 times |
| Test Example 5 | 10 | 5 | 85 | 40% or higher | 1.0 mmol/g or more | Performed | 0.6 | 10% or less | 3.0 | 1.4 times or more |
| Comparative Example 1 | 55 | 27.5 | 17.5 | 40% or higher | 1.0 mmol/g or more | Not performed | 0.1 | 10% or less | 0.1 | 1.4 times or more |
| Comparative Example 2 | 67 | 33 | 0 | 40% or higher | 1.0 mmol/g or more | Not performed | 0.1 | 10% or less | 0.1 | 1.4 times or more |
| Test Example 6 | 55 | 27.5 | 17.5 | less than 40% | 1.0 mmol/g or more | Performed | 0.6 | 10% or less | 0.5 | 1.4 times or more |
| Test Example 7 | 67 | 33 | 0 | less than 40% | 1.0 mmol/g or more | Performed | 0.6 | 10% or less | 0.5 | 1.4 times or more |
| Test Example 8 | 67 | 33 | 0 | 40% or higher | 1.0 mmol/g or more | Performed | 0.6 | over 10% | 2.5 | 1.4 times or more |
| Test Example 9 | 67 | 33 | 0 | 40% or higher | 0.05mmol/g or less | Performed | 0.6 | 10% or less | 3.0 | less than 1.4 times |
| Test Example 10 | 76 | 0.0 | 24 | 40% or higher | 1.0 mmol/g or more | Performed | 0.3 | 10% or less | 0.5 | less than 1.4 times |

The test piece was subjected to measurement of flexural modulus in accordance with JIS K 7171: 1994. In the Table, when the value of the flexural modulus of the test piece (flexural modulus of the composite resin) was 1.4 times or more the value of the flexural modulus of the resin per se (1.4 Gpa), the test piece was evaluated as "1.4 times or more", whereas when less than 1.4 times, the test piece was evaluated as "less than 1.4 times".

### <Assessment Test 2>

Next, the microfiber cellulose solid bodies were assessed for hardness. The assessment includes a dry test using dry solid bodies as a sample and a wet test using solid bodies soaked in water as a sample. The assessment was conducted in the following procedure.

### <Assessment Test 2: Dry Test>

The microfiber cellulose solid bodies obtained from Procedure (4) of the Assessment Test 1 discussed above was measured off by 0.2 g and placed on a flat desk. A weight of 1 kg, 5 kg, 10 kg, 20 kg, or 30 kg was placed gently on the solid bodies covering the same and, after the lapse of 10 seconds, removed to observe for any disintegration of the solid bodies. The results are shown in Table 2. Disintegration in shape of the solid bodies was observed for the 30 kg weight, but was not for the 1 kg to 20 kg weights. The composition of the microfiber cellulose solid bodies was adjusted so that the ratio by mass of the microfiber cellulose of which hydrogen groups were substituted with carbamate groups / MAPP maleic anhydride-modified polypropylene resin / polypropylene resin is 55/27.5/17.5. The microfiber cellulose solid bodies were in the form of columnar pieces each having a diameter of 4.5 mm and a height of 25 mm.

**[Table 2]**

| | | Weight | | | | |
|---|---|---|---|---|---|---|
| | | 1 kg | 5 kg | 10 kg | 20 kg | 30 kg |
| Disintegration | 1st try | Not observe d | Not observe d | Not observe d | Not observe d | Observed |
| | 2nd try | Not observe d | Not observe d | Not observe d | Not observe d | Observed |

### <Assessment Test 2: Wet Test>

The microfiber cellulose solid bodies obtained from Procedure (4) of the Assessment Test 1 discussed above was measured off by 10 g, placed in a 1 L beaker together with 500 g of water, stirred with a vaned stirrer (TORNADO SM104 manufactured by AS ONE CORPORATION) or a household mixer for 30 seconds, and left to stand to observe for any disintegration in the microfiber cellulose solid bodies. The stirring was carried out at a rotation speed of 300 rpm, 800 rpm, or 10000 rpm. The results are shown in Table 3. Disintegration of the solid bodies was not observed for the rotation speed of 300 rpm and 800 rpm, but was observed for the rotation speed of 10000 rpm. The microfiber cellulose solid bodies were similar to those used in the dry test in composition, shape, and size.

**[Table 3]**

| | | Stirrer | | Mixer |
|---|---|---|---|---|
| | | 300 rpm | 800 rpm | 10,000 rpm |
| Disintegration | 1st try | Not observed | Not observed | Observed |
| | 2nd try | Not observed | Not observed | Observed |

The microfiber cellulose solid bodies used in Assessment Test 2 were not observed to be disintegrated during transportation in predetermined containers containing a plurality of the bodies, easy to introduce into a kneader, had a strength to easily disintegrate by kneading after the introduction into the kneader, and were easy to handle.

### INDUSTRIAL APPLICABILITY

The present invention is applicable to a microfiber cellulose solid body, microfiber cellulose composite resin, and a method for production of the microfiber cellulose solid body.

## Claims

1. A microfiber cellulose solid body formed by compressing a mixture comprising resin powder and microfiber cellulose having an average fiber width of 0.1 to 19 µm,
wherein the microfiber cellulose solid body has a volume of 6 to 4000 mm³ and a bulk density of 0.3 to 1.0 g/cm³.

2. The microfiber cellulose solid body according to claim 1,
wherein the mixture comprises microfiber cellulose having an average fiber width of 0.1 to 19 µm, and hydroxyl groups of the microfiber cellulose have partially or fully been substituted with carbamate groups.

3. The microfiber cellulose solid body according to claim 2,
wherein a substitution rate of the hydroxy groups of the microfiber cellulose with the carbamate groups is 0.5 mmol/g to 2.0 mmol/g.

4. The microfiber cellulose solid body according to any one of claims 1 to 3,
wherein the resin powder is formed of one or a combination of a plurality of members selected from the group consisting of maleic anhydride-modified polypropylene resins, polypropylene resins, and polyethylene resins.

5. The microfiber cellulose solid body according to any one of claims 1 to 4,
wherein a moisture percentage of the microfiber cellulose solid body is 20% or less.

6. The microfiber cellulose solid body according to any one of claims 1 to 5,
wherein a fine fiber percentage of the microfiber cellulose is 5% to 80%.

7. The microfiber cellulose solid body according to any one of claims 1 to 6,
wherein a raw material pulp for the microfiber cellulose has a lignin content of 1% or lower.

8. A method for preparing a microfiber cellulose solid body, comprising:
subjecting a mixture comprising resin powder and microfiber cellulose having an average fiber width of 0.1 to 19 µm, to a compression treatment to obtain a microfiber cellulose solid body,
wherein the compression treatment is performed so that the microfiber cellulose solid body has a volume of 6 to 4000 mm³ and a bulk density of 0.3 to 1.0 g/cm³.

9. A method for preparing a microfiber cellulose solid body, comprising:
heat-treating a cellulose raw material and at least one of urea and a derivative thereof to partially or fully substitute hydroxyl groups of cellulose with carbamate groups,
defibrating the cellulose raw material into an average fiber width of 0.1 to 19 µm, and
subjecting a mixture comprising resin powder and a resulting microfiber cellulose to a compression treatment to obtain a microfiber cellulose solid body,
wherein the compression treatment is performed so that the microfiber cellulose solid body has a volume of 6 to 4000 mm³ and a bulk density of 0.3 to 1.0 g/cm³.
